# EUROPÄISCHE PATENTSCHRIFT

(11) **EP 1 654 109 B1**
(45) Veröffentlichungstag und Bekanntmachung des Hinweises auf die Patenterteilung: **25.02.2009**
(21) Anmeldenummer: 04762523.1
(22) Anmeldetag: 28.07.2004
(51) Int. Cl.: B29C 70/64, B29C 59/00

(54) **VERFAHREN ZUR VERFORMUNG EINES POLYMERS SOWIE DARAUS HERGESTELLTE PRODUKTE, INSBESONDERE EIN ADHÄSIVUM**
METHOD FOR FORMING A POLYMER AND PRODUCTS PRODUCED THEREFROM IN PARTICULAR AN ADHESIVE
PROCEDE DE DEFORMATION D'UN POLYMERE ET PRODUITS OBTENUS SELON LEDIT PROCEDE, NOTAMMENT ADHESIF

(30) Priorität: 01.08.2003 DE 10336018
(43) Veröffentlichungstag der Anmeldung: 10.05.2006
(73) Patentinhaber: Batal, Jan, 66133 Saarbrücken-Scheidt (DE)
(72) Erfinder: Batal, Jan, 66133 Saarbrücken-Scheidt (DE)
(74) Vertreter: Lösch, Christoph Ludwig Klaus
(86) Internationale Anmeldenummer: PCT/DE2004/001678
(87) Internationale Veröffentlichungsnummer: WO 2005/011963

(56) Entgegenhaltungen:
- US-A- 4 172 916
- US-A- 4 960 612

## Beschreibung

Die Erfindung betrifft ein Verfahren zur Verformung eines Polymers ausgehend von flüssigem Polymermaterial. Ferner betrifft die Erfindung ein Adhäsivum, insbesondere eine Klebefolie, eine selbstreinigende Oberfläche, eine Wärmeleitfolie und einen Klettverschluß, welche insbesondere nach einem derartigen Verfahren hergestellt sind.

US 4 960 612 A offenbart ein Verfahren gemäß dem Oberbegriff des Anspruchs 1 zur Herstellung einer Wärmeleitfolie. Hierbei wird mehrfach Polymerausgangsprodukte mit magnetischen Partikeln angereichert und zur Ausbildung fingerförmiger Vorsprünge einem Magnetfeld ausgesetzt. Anschließend wird das Polymer ausgehärtet.

US 4 172 916 A offenbart ein Verfahren zur Herstellung von Strukturen mit sandwich-artigen Aufbau. Das Kernmaterial besteht aus mit magnetischen Partikeln angereicherten viskosem Material. Durch Anlegen eines magnetischen Feldes bilden das Kernmaterial stegförmige Verbindungen zwischen den beiden Deckschichten aus.

Der Erfindung liegt die Aufgabe zugrunde, ein Verfahren zur Verformung eines Polymers anzubieten, durch welches ein Polymer mit hierarchischen Oberflächenstrukturen erzeugt werden kann. Ferner sollen ein Adhäsivum, insbesondere eine Klebefolie, eine selbstreinigende Oberfläche, eine Wärmeleitfolie und ein Klettverschluß mit derartigen hierarchischen Oberflächenstrukturen angeboten werden.

Für das Verfahren wird diese Aufgabe durch die Merkmale des Patentanspruchs 1 gelöst. Vorteilhafte Verfahrensvarianten werden in den Unteransprüchen 2 - 9 beschrieben. Für das Adhäsivum, insbesondere die Klebefolie, wird die Aufgabe durch Patentanspruch 10, für die selbstreinigende Oberfläche durch Patentanspruch 11, für die Wärmeleitfolie durch Patentanspruch 12 und für den Klettverschluß durch Patentanspruch 13 gelöst.

Beim erfindungsgemäßen Verfahren werden die Edukte des flüssigen Polymermaterials mit magnetischen oder magnetisierbaren Partikeln vermischt. In einem zweiten Verfahrensschritt wird das derartig bearbeitete Polymermaterial in ein Magnetfeld eingebracht. Durch die vorhandenen magnetischen Feldkräfte werden die magnetischen oder magnetisierbaren Partikel aus dem Polymermaterial herausgezogen, wobei diese nach dem Einbringen in das Magnetfeld über fadenartige oder bürstenartige Verbindungen weiterhin mit dem Polymermaterial in Verbindung stehen.

Nachdem durch die Einbringung und Erfassung der magnetischen oder magnetisierbaren Partikeln die Verformung des Polymermaterials stattgefunden hat, erfolgt eine abschließende Polymerisation (Aushärtung) des Polymermaterials. Damit wird die entstandene geometrische Form des Polymermaterials mit den erzeugten fadenartigen Verbindungen konserviert.

Im Ergebnis entsteht ein ausgehärtetes Polymermaterial mit hierarchischen Oberflächenstrukturen im Mikro- und Nanobereich, wodurch sich die Kontaktfläche zu anderen rauhen Oberflächen vergrößert. Hierdurch können zwischen der rauhen Oberfläche und dem erfindungsgemäß hergestellten Oberflächenmaterial wirkende van-der-Waals-Kräfte genutzt werden, um deutliche, z.T. hohe makroskopische Haftkräfte zwischen dem Polymer und der rauhen Oberfläche entstehen zu lassen. Damit entsteht eine Haft- oder Klebewirkung, welche gewerblich genutzt werden kann.

Eine auf diese Weise entstandene Haftkraft zwischen einem erfindungsgemäß hergestellten Polymermaterial beruht zum größten Teil auf den genannten van-der-Waals-Kräften und ist von weiteren physikalischen Gegebenheiten (z.B. Kapillarkräften) weitgehend unabhängig.

Durch das erfindungsgemäße Verfahren können somit Klebemittel aller Art erzeugt werden, welche mit nahezu allen anderen Oberflächen eine Haft- oder Klebeverbindung eingehen können. Eine derartige Klebverbindung aufgrund von van-der-Waals-Kräften benötigt keine haftvermittelnden weiteren Substanzen und entfaltet die Klebewirkung auch unter Wasser und im Vakuum.

Das Funktionsprinzip einer Haftung augrund von van-der-Waals-Kräften zwischen verschiedenen Oberflächen existiert bereits in der Natur und wird von verschiedenen Tieren, z.B. Geckos und Spinnen, genutzt, um eine Haftung des Tieres an unterschiedlichsten Oberflächen zu ermöglichen.

Beim erfindungsgemäßen Verfahren werden magnetische oder magnetisierbare Mikro- oder Nanopartikel dem/den Edukten eines flüssigen Polymermaterials hinzugefügt und - wie beschrieben - vor oder während des Aushärtens des Polymermaterials durch magnetische Feldkräfte aus der noch beweglichen Strukturmatrix des Polymermaterials herausgezogen. Das Polymermaterial adheriert an den magnetischen oder magnetisierbaren Partikeln und wird durch Kohäsionskräfte oder entstehende Oligomere als längliche, fadenartige oder kammartige Struktur aus der Oberfläche des Polymermaterials herausgezogen.

Die geometrische Dimensionierung des entstehenden Polymermaterials hängt u.a. von der Viskosität des polymerisierten oder erwärmten Polymermaterials, von der Stärke des Magnetfeldes, der Feldstärke über der Zeit und von der geometrischen Anordnung (Winkelanordnung) des Magnetfeldes zum Polymermaterial ab.

Abhängig von der Menge der eingebrachten magnetischen oder magnetisierbaren Partikel kann die durchschnittliche Dichte der entstehenden fadenartigen Verbindungen (Anzahl der entstehenden Emergenzen pro Fläche) variiert und bestimmt werden.

Durch gleichzeitige oder sukzessive Verwendung unterschiedlicher Partikelgrößen der magnetischen oder magnetisierbaren Partikel können auch mehrstufige hierarchische Oberflächenstrukturen hergestellt werden.

Das erfindungsgemäße Verfahren eignet sich für polymerisierte bzw. durch entsprechende Lösungsmittel aufgeweichte Polymermaterialien und für durch wärmeverflüssigte Thermoplaste. Ferner können Systeme aus Polypeptiden und Enzymen durch das erfindungsgemäße Verfahren bearbeitet werden.

Gemäß einer vorteilhaften Verfahrensvariante wird ein ausgerichtetes Magnetfeld verwendet, welches parallele Feldlinien aufweist, wobei die Feldlinien parallel zur Längsrichtung der zu erzielenden fadenartigen Verbindungen des Polymermaterials ausgerichtet sind. Durch Anordnung des Magnetfelds gegenüber dem Polymermaterial kann die Geometrie der fadenartigen Verbindungen verändert werden.

Die magnetischen und magnetisierbaren Partikel können mit den Monomeren des Polymermaterials in einem Rührwerk vermischt werden. Hierdurch entsteht eine besonders innige Verbindung und hohe Verteilung der magnetischen und magnetisierbaren Partikel im Polymermaterial.

Eine abschließende Polymerisation des Polymermaterials kann durch eine Lichtquelle mittels Fotopolymerisation erfolgen. Ferner kann auch ein Aushärten durch Wärmebehandlung stattfinden.

Gemäß einer vorteilhaften Verfahrensvariante wird das erfindungsgemäße Verfahren mehrfach durchgeführt, wobei bestimmte Verfahrensparameter (z.B. Feldstärke oder Ausrichtung des Magnetfeldes) variiert werden. Hierdurch können mehrstufige und hierarchische Oberflächenstrukturen mit unterschiedlich ausgebildeten Ebenen, die sich hinsichtlich der Ausrichtung oder der Höhe der Ebenen unterscheiden können. Durch derartige mehrstufige und mehrseitige Oberflächenstrukturen vergrößert sich die Haftwirkung des entstehenden Polymermaterials, da die auftretenden van-der-Waals-Kräfte auf vielfältige Weise eine Haftkraftverbindung mit einem weiteren Kontaktmaterial erzeugen können.

Bei einer mehrmaligen Durchführung des Verfahrens kann die Oberfläche des Polymermaterials mehrmals aufgeweicht werden, um eine Entstehung neuer fadenartiger Verbindungen zu ermöglichen. Diese Aufweichung kann durch ein Lösungsmittel entstehen oder durch Auftrag von Enzymen durchgeführt werden.

Ferner kann eine Aufweichung der Oberfläche des Polymermaterials durch Wärmeeinwirkung entstehen. Die genannten Methoden der Aufweichung der Oberfläche des Polymermaterials können auch gemeinsam oder sukzessive angewendet werden.

Nach einer besonders vorteilhaften Verfahrensvariante werden bei einer erneuten Durchführung des Verfahrens nochmals weitere magnetische oder magnetisierbare Partikel, insbesondere anderer Partikelgrößen, in die Oberfläche des Polymermaterials eingebracht. Damit können weitere gewünschte geometrische oder stärker und schwächer dosierte van-der-Waals-Kräfte erzeugt werden. Insgesamt kann ein Polymermaterial mit gewünschtem Haftkraftverhalten entsprechend den Anforderungen des Benutzers modelliert werden.

Durch das erfindungsgemäße Verfahren kann insbesondere ein neuartiges Adhäsivum, insbesondere eine Klebefolie hergestellt werden, welche die geschilderte Haftwirkung besitzt.

Desweiteren können durch das erfindungsgemäße Verfahren selbstreinigende Oberflächen, insbesondere biomimetische Lotus-Oberflächen, hergestellt werden, welche z.B. im Badebereich verwendet werden können und eine Verschmutzung von Badekacheln oder Badewandbelag verhindern.

Ferner können durch das erfindungsgemäße Verfahren Wärmeleitfolien oder Klettverschlüsse hergestellt werden. Weitere Anwendungsmöglichkeiten und Produkte, die durch das erfindungsgemäße Verfahren hergestellt werden können, sind ohne weiteres denkbar und können hier nicht abschließend aufgezählt werden.

Die Erfindung ist anhand von Ausführungsbeispielen in den Zeichnungsfiguren näher dargestellt. Es zeigen:
- Fig. 1: eine Anordnung von magnetischen oder magnetisierbaren Partikeln in einem Polymermaterial,
- Fig. 2: eine schematische Darstellung der Einbringung des Polymermaterials in ein Magnetfeld,
- Fig. 3: das "Herauswachsen" der fadenartigen Verbindungen aus dem Polymermaterial,
- Fig. 4: die Verfestigung der herausgewachsenen fadenartigen Verbindungen im ausgehärteten Polymermaterial,
- Fig.5: eine Detailansicht einer einzigen fadenartigen Verbindung,
- Fig. 6: Einbringung eines Lösungsmittels in eine fadenartige Verbindung nach Fig. 5,
- Fig. 7: Einbringung der fadenartigen Verbindung nach Fig. 6 in ein Magnetfeld,
- Fig. 8: Herausbildung weiterer kleinerer fadenartiger Verbindungen sowie
- Fig. 9: die Verfestigung der herausgewachsenen fadenartigen Verbindungen im ausgehärteten Polymermaterial

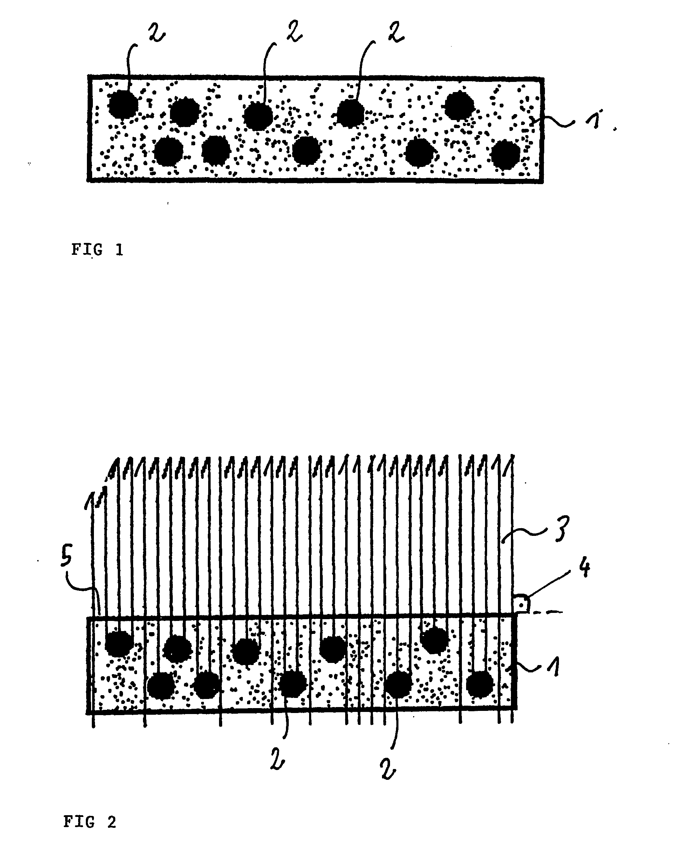

Fig. 1 zeigt ein schematisch dargestelltes flüssiges Polymermaterial 1 mit eingemischten magnetischen oder magnetisierbaren Partikeln 2.

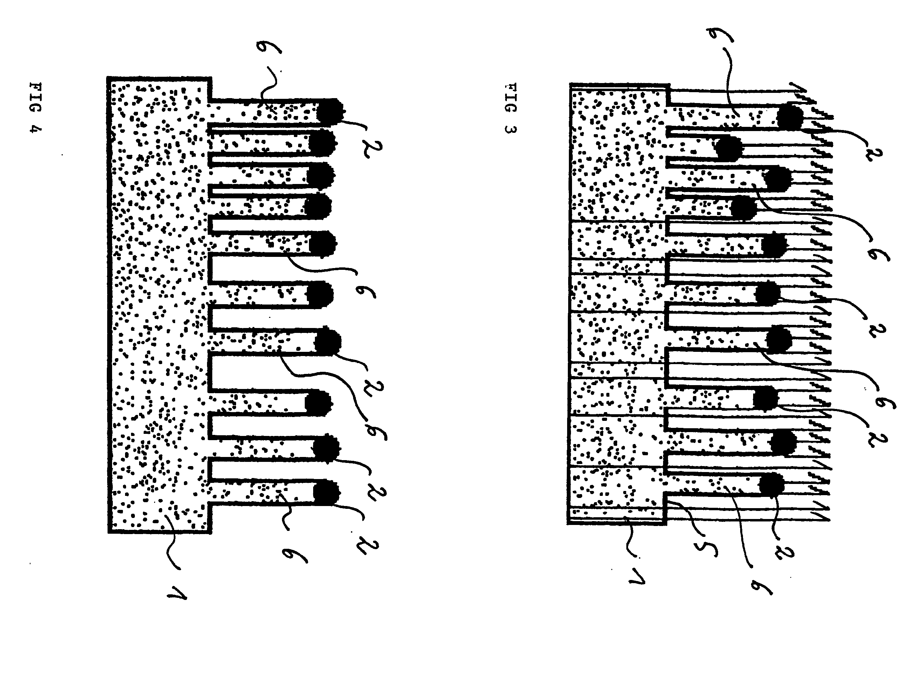

In Fig. 2 wird das Polymermaterial 1 nach Fig. 1 einem Magnetfeld ausgesetzt, welches schematisch dargestellte Feldlinien 3 aufweist, welche in einem rechten Winkel 4 zur Oberfläche 5 des Polymermaterials 1 angesetzt werden. Durch das magnetische Feld werden Kräfte auf die Partikel 2 ausgeübt, welche ein Herausziehen aus der Oberfläche 5 des Polymermaterials 1 bewirken, so daß fadenartige Verbindungen 6 gemäß Fig. 3 entstehen. Das Magnetfeld kann durch einen Elektro- oder Permanentmagneten erzeugt werden, der in der Nähe des noch flüssigen Polymermaterials 1 angebracht wird. Durch Bestimmung der Ausrichtung der Feldlinien 3 des Magnetfeldes, welche hier parallel ausgerichtet sind, kann die Geometrie der fadenartigen Verbindungen 6 bestimmt werden.

Beim Herausziehen der magnetischen Partikel 2 aus der Oberfläche 5 des Polymermaterials 1 findet eine weitere Polymerisation des Polymermaterials 1 statt und die Zähigkeit des Polymermaterials 1 erhöht sich. Durch die Steigerung der Zugfestigkeit des Polymermaterials 1 verringert sich die Beweglichkeit der Partikel 2, bis ein annäherndes Kräftegleichgewicht hergestellt wird und der Vorgang des Herausziehens der Partikel 2 aus dem Polymermaterials 1 zum Stillstand kommt.

Nach einer parallelen oder nun folgenden Aushärtung des Polymermaterials 1 wird die entstandene Struktur gemäß Fig. 4 mit vorhandenen fadenartigen Verbindungen 6 stabilisiert. Nun kann das Magnetfeld abgeschaltet werden und es entsteht ein polymerisiertes und ausgehärtetes Polymermaterial 1 gemäß Fig. 4 mit herausgebildeten und stabilen fadenartigen Verbindungen 6. Diese fadenartigen Verbindungen 6 stellen einen vielfältigen Oberflächenkontakt mit einem weiteren Material her, wodurch auf die geschilderte Art und Weise durch die auftretenden van-der-Waals-Kräfte eine Haftwirkung entsteht. Damit kann das entstandene ausgehärtete Polymermaterial 1 als Adhäsivum oder als Klettverschluß verwendet werden.

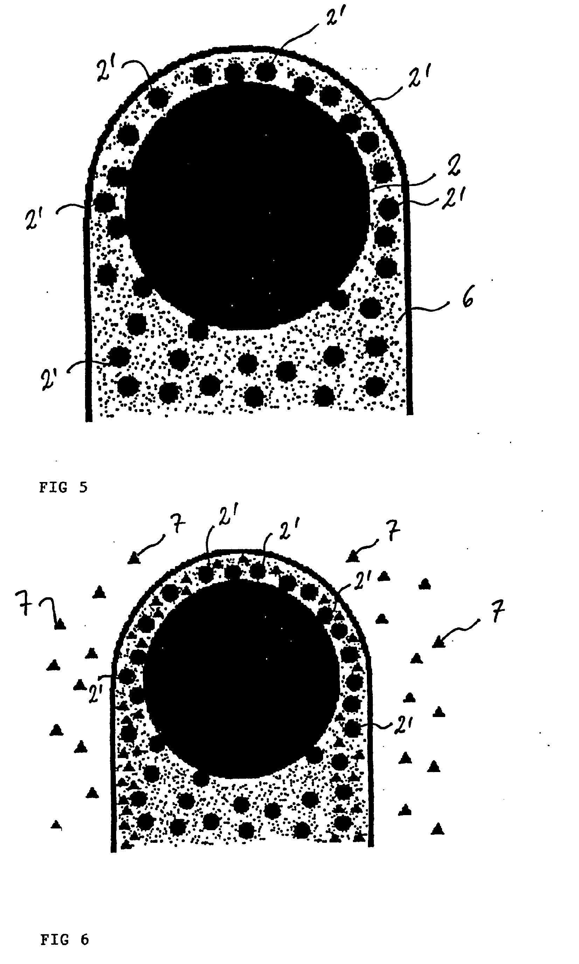

Gemäß einer vorteilhaften Verfahrensvariante kann bei einer bereits ausgebildeten fadenartigen Verbindung 6 gemäß Fig. 5 eine weitere Anwendung des erfindungsgemäßen Verfahrens erfolgen. Hierbei wird vörteilhafterweise die fadenartige Verbindung 6 zunächst erneut z.B. durch Anwendung eines Löungsmittels 7 aufgeweicht (vgl. Fig. 6).

In die Randbereiche der fadenartigen Verbindungen 6 können nun weitere magnetische oder magnetisierbare Partikel 2', insbesondere kleinerer Partikelgröße, zugeführt werden.

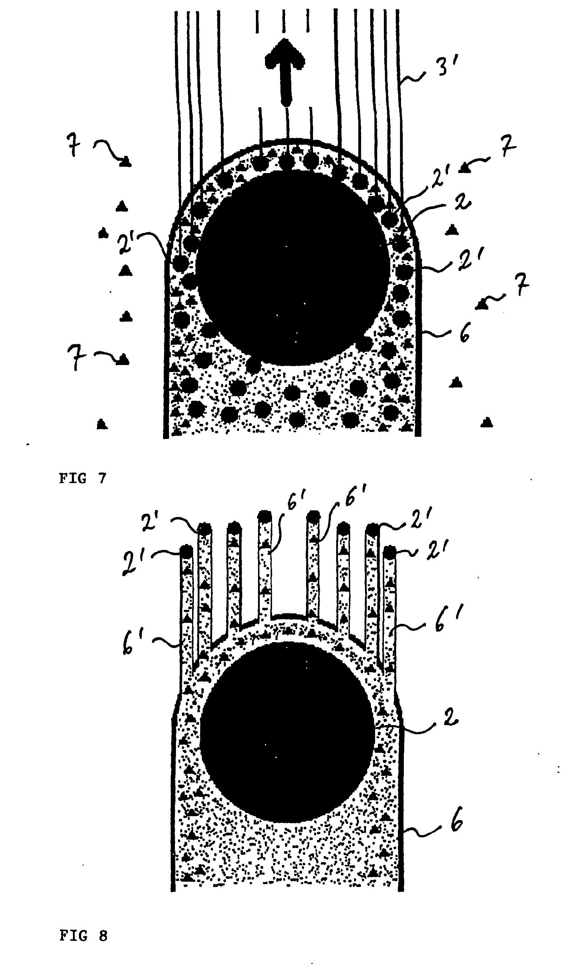

Nach einer weiteren Aufbringung eines Magnetfeldes mit den Feldlinien 3' in einer erneuten Durchführung des Verfahrens werden nun die in der aufgeweichten Schicht des Polymermaterials 1 vorhandenen kleineren Partikel 2' vom Magnetfeld erfaßt und es entstehen weitere fadenartige Verbindungen 6' (vgl. Fig. 7 und 8).

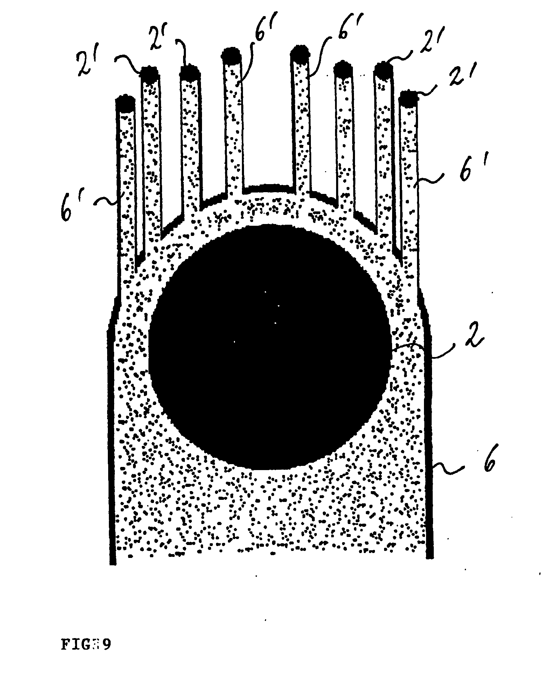

Insgesamt entsteht gemäß der Darstellung nach Fig. 9 eine mehrstufige Oberflächenstruktur, wobei weitere Möglichkeiten der Entstehung von van-der-Waals-Kräften ermöglicht werden, wodurch die Haftwirkung, insbesondere auf rauhen und mehrstufigen Oberflächen des Kontaktkörpers verbessert wird.

Die Struktur gemäß Fig. 9 wird stabilisiert, indem das Lösungsmittel aus der Umgebung der fadenartigen Verbindung 6' durch Konzentrationsverringerung und durch Verdampfung entfernt wird.

Das erfindungsgemäße Verfahren eignet sich zur industriellen Herstellung eines Adhäsivums, insbesondere einer Klebefolie, einer selbstreinigenden Oberfläche, einer Wärmeleitfolie oder eines Klettverschlusses. Dabei kann aus dem Polymermaterial 1 nach Einbringung der magnetischen oder magnetisierbaren Partikel 2 in einem Rührwerk ein Polymerfilm erzeugt werden, der auf einem Förderband aufgebracht wird. Der entstandene Polymerfilm kann unter einem Elektro- oder Permanentmagneten durch Betätigung des Förderbandes vorbeigeführt werden. Dieser Vorgang kann im Durchlauf oder intervallartig stattfinden. In unmittelbarer oder nachfolgender Umgebung des Elektro- oder Permanentmagneten kann sich eine Lichtquelle befinden, welche das nun durch die aufgrund des Magnetfeldes herausgebildeten fadenartigen Verbindungen strukturiertem Polymermaterial aushärtet. Die derartig ausgehärtete stabile Polymerfolie kann nun aus dem Magnetfeld herausgeführt werden und in Folgeprozessen z.B. durch Schneidvorgänge aufgeteilt werden.

Insgesamt können durch das erfindungsgemäße Verfahren die genannten Industrieprodukte in hoher Stückzahl und wirtschaftlich hergestellt werden.
Das erfindungsgemäße Verfahren kann wie beschrieben für Polymere sowie auch analog für durch Wärme verflüssigte Thermoplaste oder Systeme aus Polypeptiden und Enzymen durchgeführt werden.

Statt den magnetischen oder magnetisierbaren Partikeln 2 können auch elektrisch geladene Partikel verwendet werden, die den Kräften eines elektrischen Feldes ausgesetzt werden. So können bei einer ersten Durchführung des Verfahrens magnetische oder magnetisierbare Partikel in einem Magnetfeld und bei einer weiteren Durchführung des Verfahrens elektrisch geladene Partikel in einem elektrischen Feld verwendet werden.

Die Polymerisation kann auch während des magnetischen Strukturierungsprozesses bereits durch einen entsprechenden Katalysator in Gang gesetzt worden sein, dessen Parameter so gewählt sind, daß die Polymerisation ausreichend fortgeschritten ist, um die entstandene Struktur auch nach Entfernung des magnetischen bzw. elektrischen Feldes zu stabilisieren. Die Polymerisation muß nicht zwingend schlagartig nach der Strukturierung stattfinden.

### BEZUGSZEICHEN

- 1: Polymermaterial
- 2: Partikel
- 3: Feldlinie
- 4: Winkel
- 5: Oberfläche
- 6: fadenartige Verbindung
- 7: Lösungsmittel

## Patentansprüche

1. Verfahren zur Verformung eines Polymers ausgehend von flüssigem Polymermaterial mit folgenden Verfahrensschritten:
a) Vermischung von magnetischen oder magnetisierbaren Partikeln (2) mit den Monomeren des Polymermaterials (1),
b) Einbringung des Polymermaterials (1) in ein Magnetfeld,
c) Erfassung und Herausziehen der magnetischen oder magnetisierbaren Partikel (2) aus dem Polymermaterial (1) durch das Magnetfeld, wobei die magnetischen oder magnetisierbaren Partikeln (2) über fadenartige Verbindungen (6) mit dem Polymermaterial (1) in Verbindung stehen,
d) abschließende Polymerisation des Polymermaterials (1);
**dadurch gekennzeichnet daß** das Verfahren mehrmals durchgeführt wird und vor einer erneuten Durchführung des Verfahrens die Oberfläche (5) des Polymermaterials (1) aufgeweicht wird.

2. Verfahren nach Anspruch 1, wobei das Magnetfeld ausgerichtet ist und die Feldlinien (3) des Magnetfeldes parallel zur Längsrichtung der zu erzielenden fadenartige Verbindungen (6) verlaufen.

3. Verfahren nach Anspruch 1 oder 2, wobei die magnetischen oder magnetisierbaren Partikeln (2) mit den Monomeren des Polymermaterials (1) in einem Rührwerk vermischt werden.

4. Verfahren nach einem der vorhergehenden Ansprüche, wobei die abschließende Polymerisation des Polymermaterials (1) durch eine Lichtquelle mittels Photopolymerisation erfolgt.

5. Verfahren nach Anspruch 1, wobei vor einer erneuten Durchführung des Verfahrens die entstandene Oberfläche (5) des Polymermaterials (1) durch ein Lösemittel (7) aufgeweicht wird.

6. Verfahren nach Anspruch 1 oder 5, wobei vor einer erneuten Durchführung des Verfahrens die entstandene Oberfläche (5) des Polymermaterials (1) durch Auftrag von Enzymen aufgeweicht wird.

7. Verfahren nach einem der Ansprüche 1 - 6, wobei vor einer erneuten Durchführung des Verfahrens die entstandene Oberfläche (5) des Polymermaterials (1) durch Wärmeeinwirkung aufgeweicht wird.

8. Verfahren nach einem der Ansprüche 1 - 7, wobei vor einer erneuten Durchführung des Verfahrens weitere magnetische oder magnetisierbare Partikel (2') in die Oberfläche (5) des Polymermaterials (1) eingebracht werden.

9. Verfahren nach Anspruch 10, wobei die weiteren magnetischen oder magnetisierbaren Partikel (2') verglichen mit früher eingebrachten magnetischen oder magnetisierbaren Partikeln (2) eine geringere Partikelgröße besitzen.

10. Adhäsivum, insbesondere Klebefolie, erhältlich durch ein Verfahren nach einem der Ansprüche 1 - 9.

11. Selbstreinigende Oberfläche, erhältlich durch ein Verfahren nach einem der Ansprüche 1 - 9.

12. Wärmeleitfolie, erhältlich durch ein Verfahren nach einem der Ansprüche 1 - 9.

13. Klettverschluß, erhältlich durch ein Verfahren nach einem der Ansprüche 1 - 9.

## Claims

1. Method for forming a polymer, starting with liquid polymer material, having the following method steps:
a) mixing magnetic or magnetizable particles (2) with the monomers of the polymer material (1)
b) introducing the polymer material (1) into a magnetic field,
c) capturing and withdrawing the magnetic or magnetizable particles (2) from the polymer material (1) by the magnetic field, the magnetic or magnetizable particles (2) being in connection with the polymer material (1) by means of thread-like connections (6),
d) final polymerization of the polymer material (1);
**characterized in that** the method is performed a number of times and, before renewed performance of the method, the surface (5) of the polymer material (1) is softened.

2. Method according to Claim 1, wherein the magnetic field is aligned and the field lines (3) of the magnetic field run parallel to the longitudinal direction of the thread-like connections (6) to be achieved.

3. Method according to Claim 1 or 2, wherein the magnetic or magnetizable particles (2) are mixed with the monomers of the polymer material (1) in a mixer.

4. Method according to one of the preceding claims, wherein the final polymerization of the polymer material (1) takes place by means of photopolymerization by a light source.

5. Method according to Claim 1, wherein, before renewed performance of the method, the created surface (5) of the polymer material (1) is softened by a solvent (7).

6. Method according to Claim 1 or 5, wherein, before renewed performance of the method, the created surface (5) of the polymer material (1) is softened by application of enzymes.

7. Method according to one of Claims 1 - 6, wherein, before renewed performance of the method, the created surface (5) of the polymer material (1) is softened by exposure to heat.

8. Method according to one of Claims 1 - 7, wherein, before renewed performance of the method, further magnetic or magnetizable particles (2') are introduced into the surface (5) of the polymer material (1).

9. Method according to Claim 8, wherein the further magnetic or magnetizable particles (2') have a smaller particle size in comparison with magnetic or magnetizable particles (2) introduced earlier.

10. Adhesive, in particular adhesive film, obtainable by a method according to one of Claims 1 - 9.

11. Self-cleaning surface, obtainable by a method according to one of Claims 1 - 9.

12. Heat-conducting film, obtainable by a method according to one of Claims 1 - 9.

13. Velcro fastener, obtainable by a method according to one of Claims 1 - 9.

## Revendications

1. Procédé de formage d'un polymère à partir d'un matériau polymère liquide avec les étapes suivantes :
a) mélange de particules magnétiques ou magnétisables (2) avec les monomères du matériau polymère (1),
b) introduction du matériau polymère (1) dans un champ magnétique,
c) captage et extraction des particules magnétiques ou magnétisables (2) du matériau polymère (1) par le champ magnétique, les particules magnétiques ou magnétisables (2) étant reliées au matériau polymère (1) par des liaisons filamenteuses (6),
d) polymérisation ultérieure du matériau polymère (1) ;
**caractérisé en ce que**
le procédé est réalisé plusieurs fois et avant une nouvelle réalisation du procédé, la surface (5) du matériau polymère (1) est ramollie.

2. Procédé selon la revendication 1, dans lequel le champ magnétique est orienté et les lignes de champ (3) du champ magnétique sont parallèles à la direction longitudinale des liaisons filamenteuses (6) à former.

3. Procédé selon la revendication 1 ou 2, dans lequel les particules magnétiques ou magnétisables (2) sont mélangées avec les monomères du matériau polymère (1) dans un agitateur.

4. Procédé selon l'une quelconque des revendications précédentes, dans lequel la polymérisation ultérieure du matériau polymère (1) a lieu par une source de lumière par photopolymérisation.

5. Procédé selon la revendication 1, dans lequel avant une nouvelle réalisation du procédé, la surface résultante (5) du matériau polymère (1) est ramollie par un solvant (7).

6. Procédé selon la revendication 1 ou 5, dans lequel avant une nouvelle réalisation du procédé, la surface résultante (5) du matériau polymère (1) est ramollie par application d'enzymes.

7. Procédé selon l'une quelconque des revendications 1 à 6, dans lequel avant une nouvelle réalisation du procédé, la surface résultante (5) du matériau polymère (1) est ramollie par l'effet de la chaleur.

8. Procédé selon l'une quelconque des revendications 1 à 7, dans lequel avant une nouvelle réalisation du procédé, des particules magnétiques ou magnétisables supplémentaires (2') sont introduites dans la surface (5) du matériau polymère (1).

9. Procédé selon la revendication 8, dans lequel les particules magnétiques ou magnétisables supplémentaires (2') présentent une taille de particule plus petite que celle des particules magnétiques ou magnétisables (2) introduites auparavant.

10. Adhésif, notamment feuille adhésive, pouvant être obtenu par un procédé selon l'une quelconque des revendications 1 à 9.

11. Surface autonettoyante, pouvant être obtenue par un procédé selon l'une quelconque des revendications 1 à 9.

12. Feuille thermo-conductrice, pouvant être obtenue par un procédé selon l'une quelconque des revendications 1 à 9.

13. Fermeture velcro, pouvant être obtenue par un procédé selon l'une quelconque des revendications 1 à 9.
